# EUROPEAN PATENT APPLICATION

(11) **EP 2 890 164 A1**
(43) Date of publication of application: **01.07.2015**
(21) Application number: 13306862.7
(22) Date of filing: 26.12.2013
(51) Int. Cl.: H04W 8/18, H04W 48/18

(54) **Method for accessing a service, corresponding device and system**

(71) Applicant: Gemalto SA, 92190 Meudon (FR)
(72) Inventor: Roussel, Nicolas, 13705 La Ciotat (FR); Joubert, Nicolas, 13705 La Ciotat (FR); Labourie, Florent, 13705 La Ciotat (FR); Faure, Frédéric, 13705 La Ciotat (FR)

(57) **Abstract**

The invention relates to a method 20 for accessing a service.

According to the invention, a first device 12 accesses data storing means, the data storing means storing data relating to at least two subscriptions 145, 147. The method comprises the following steps. A subscription manager de-activates an active subscription, said first subscription, and activates a non-active subscription, said second subscription. The subscription manager includes a first variable relating to a previous active subscription and sets the first variable to the first subscription. The subscription manager sends, through the first device operating system, to a second device 18 a first request 26 for accessing a service by using the second subscription, as a current active subscription. The first device operating system sends to the subscription manager a message 28 for informing the subscription manager of a failure relating to an access to the service associated with the second subscription. The subscription manager includes a second variable relating to a next active subscription and sets the second variable to a current value of the first variable. The subscription manager sends to the first device operating system a message 214 for requesting the first device operating system to re-launch an execution of the subscription manager and to read data. The subscription manager de-activates, based upon a current value of the second variable, the second subscription and activates, based upon the current value of the second variable, the first subscription. The subscription manager sends, through the first device operating system, to the second device a second request 220 for accessing a service by using the first subscription, as a current active subscription. The second device sends to the subscription manager a message 222 for informing the subscription manager of a success relating to an access to the service associated with the first subscription.

The invention also relates to corresponding first device 12 and system 10.

## Description

### Field of the invention:

The invention relates generally to a method for accessing a service.

Moreover, the invention pertains to a first device for accessing a service.

The first device may be a terminal, like notably a mobile (tele)phone. Furthermore, the invention relates to a system comprising a first device and a chip.

The present invention is notably applicable to a mobile radio-communication field wherein a chip may be either an embedded chip, such as an embedded Universal Integrated Circuit Card (or eUICC), or a chip that is included within a smart card termed Subscribed Identity Module (or SIM) type card or the like, as a secure element.

Within the present description, a Secure Element (or SE) is a smart object that, on the one hand, protects access to data that the smart object stores and, on the other hand, is intended to communicate with the outside world.

### State of the art:

As known per se, a mobile phone, as a user terminal, cooperates with an SE, so as to identify and authenticate a subscriber to a mobile radio-communication network. The SE stores several subscriptions while only one subscription is active at a given time.

However, when a switch from a first subscription to a second subscription at the terminal side occurs, a remote server that manages the SE may be not aware of such a subscription switch. Thus, the remote server has one active subscription while the SE has another active subscription. The remote server is not synchronized with the SE about the lastly activated subscription. The remote server is therefore not able to access the SE.

Moreover, the terminal may also not be able to access any mobile radio-communication network and thus be in a blocked state when the two different subscriptions are not related to one and the same mobile radio-communication network. Such a blocked state implies a loss of network connectivity which is disturbing for the terminal user.

There is a need to provide a solution that allows synchronizing a remote server with the SE by using a subscription that allows a connection between the SE and the server.

### Summary of the invention:

The invention proposes a solution for solving the just herein above specified need by providing a method for accessing a service.

According to the invention, a first device accesses data storing means. The data storing means stores data relating to at least two subscriptions. The method comprises the following steps. A subscription manager de-activates an active subscription, said first subscription. The subscription manager activates a non-active subscription, said second subscription. The subscription manager includes a first variable relating to a previous active subscription. The subscription manager sets the first variable to the first subscription. The subscription manager sends, through the first device operating system, to a second device a first request for accessing a service by using the second subscription, as a current active subscription. The first device operating system sends to the subscription manager a message for informing the subscription manager of a failure relating to an access to the service associated with the second subscription. The subscription manager includes a second variable relating to a next active subscription. The subscription manager sets the second variable to a current value of the first variable. The subscription manager sends to the first device operating system a message for requesting the first device operating system to re-launch an execution of the subscription manager and to read data. The subscription manager de-activates, based upon a current value of the second variable, the second subscription. The subscription manager activates, based upon the current value of the second variable, the first subscription. The subscription manager sends, through the first device operating system, to the second device a second request for accessing a service by using the first subscription, as a current active subscription. The second device sends to the subscription manager a message for informing the subscription manager of a success relating to an access to the service associated with the first subscription.

The principle of the invention consists in that, as soon as a subscription manager carries out a subscription swap (or switch) while keeping, through a first variable relating to a previous active subscription, an initial subscription (before the switch) and attempts, without any success, to access a second device, by using a lastly activated subscription (after the switch), the subscription manager:
- sets, by using a current value of the first variable, a second variable relating to a next active subscription;
- requests the first device Operating System (or OS) to fetch data;
- activates, once re-launched, only the initial subscription by using a current value of the second variable;
- attempts again, with success, to access the second device by using the identified initial subscription.

It is to be noted that the subscription manager is supported at a client side, i.e. by either the first device itself or another device, as a third device. In other words, the first device OS may exchange with either the first device subscription manager or a third device subscription manager.

The invention solution allows switching back automatically, under a control of the subscription manager, after a first switch from an initial subscription, to the initial subscription at the subscription manager side.

Such a switch back to the initial subscription at the first device side allows accessing successfully from the subscription manager to the second device. The second device and the subscription manager share, after a second switch at the subscription manager side, data relating to the subscription which the subscription manager has switched, during a first previous switch, from.

It is noteworthy that a second device includes a remote server or a local terminal.

Contrary to the known solution, when the second device is a remote server, due to a consistency of the subscription on both sides, namely at the server side and at the first device and client side, there is no blocked state issue and no network connectivity loss issue.

Contrary to the known solution, when the second device is a remote server, due to an automatic processing of the switch to the identified initial subscription, the invention solution requires no human intervention to synchronize the subscriber manager and the second device.

The invention solution does not require, at the subscription manager side, any additional memory space that is used for storing the concerned subscription data.

According to a further aspect, the invention is a first device for accessing a service.

According to the invention, the first device comprises data storing means. The data storing means stores data relating to at least two subscriptions. The data storing means stores a subscription manager. The subscription manager is configured to de-activate an active subscription, said first subscription, and to activate a non-active subscription, said second subscription. The subscription manager includes a first variable relating to a previous active subscription. The subscription manager is configured to set the first variable to the first subscription. The subscription manager is configured to send, through the first device operating system, a first request for accessing a service by using the second subscription, as a current active subscription. The subscription manager is configured to receive from the first device operating system a message for informing the subscription manager of a failure relating to an access to the service associated with the second subscription. The subscription manager includes a second variable relating to a next active subscription. The subscription manager is configured to set the second variable to a current value of the first variable. The subscription manager is configured to send to the first device operating system a message for requesting the first device operating system to relaunch an execution of the subscription manager and to read data. The subscription manager is configured to de-activate, based upon a current value of the second variable, the second subscription and to activate, based upon the current value of the second variable, the first subscription. The subscription manager is configured to send, through the first device operating system, a second request for accessing a service by using the first subscription, as a current active subscription. The subscription manager is configured to receive a message for informing the subscription manager of a success relating to an access to the service associated with the first subscription.

The first device may be a terminal.

According to still an additional aspect, the invention is a system for accessing a service.

According to the invention, the system comprises a first device and a chip, the chip being coupled or connected to the first device. The chip comprises data storing means. The data storing means stores data relating to at least two subscriptions. The data storing means stores a subscription manager. The subscription manager is configured to de-activate an active subscription, said first subscription, and to activate a non-active subscription, said second subscription. The subscription manager includes a first variable relating to a previous active subscription. The subscription manager is configured to set the first variable to the first subscription. The subscription manager is configured to send, through the first device operating system, a first request for accessing a service by using the second subscription, as a current active subscription. The subscription manager is configured to receive from the first device operating system a message for informing the subscription manager of a failure relating to an access to the service associated with the second subscription. The subscription manager includes a second variable relating to a next active subscription. The subscription manager is configured to set the second variable to a current value of the first variable. The subscription manager is configured to send to the first device operating system a message for requesting the first device operating system to relaunch an execution of the subscription manager and to read data. The subscription manager is configured to de-activate, based upon a current value of the second variable, the second subscription. The subscription manager is configured to activate, based upon the current value of the second variable, the first subscription. The subscription manager is configured to send, through the first device operating system, a second request for accessing a service by using the first subscription, as a current active subscription. The subscription manager is configured to receive a message for informing the subscription manager of a success relating to an access to the service associated with the first subscription.

The chip may be either fixed to or removable from the first device.

The chip may be included within a Secure Element (or SE). The invention does not impose any constraint as to a kind of the secure element type.

As removable SE, it may be a SIM type card, a Secure Removable Module (or SRM), a smart dongle of the USB (acronym for "Universal Serial Bus") type, a (micro-) Secure Digital (or SD) type card or a Multi-Media type Card (or MMC) or any format card to be coupled to a host device, as first device.

### Brief description of the drawings:

Additional features and advantages of the invention will be more clearly understandable after reading a detailed description of one preferred embodiment of the invention, given as an indicative and non-limitative example, in conjunction with the following drawings:

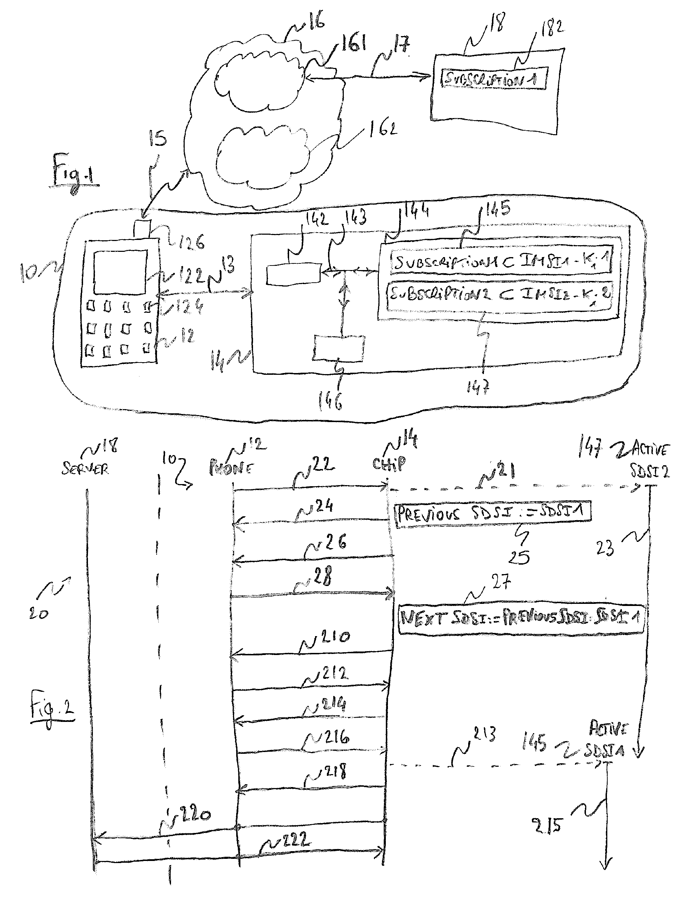

- Figure 1 illustrates a simplified diagram of a remote server and one embodiment of a terminal equipment, the terminal equipment being internally arranged to switch back to a subscription that was active before a previous switch to access the server, according to the invention; and
- Figure 2 represents an example of one message flow between the server and the distinct entities of the terminal equipment of figure 1, so that a subscription manager supported by a chip hosted by the terminal controls a data exchange with the server, so as to share the data relating to a subscription that is active before and after a double subscription switch.

### Detailed description:

Herein under is considered a case in which the invention method for accessing a service is implemented by a mobile phone, as a first device, a remote server, as a second device, and a chip, as a third device, that is fixed to the phone, as a chip host device.

According to another embodiment, the invention method for accessing a service is implemented by a mobile phone, as first device and standalone entity, and a remote server, as a second device. In other words, the phone, as a terminal, does not cooperate with any chip, so as to synchronize, between a subscription manager supported by the phone and the phone OS, data relating to a subscription that is active before and after a double subscription switch. According to such an embodiment (not represented), the first device is adapted to carry out the functions that are carried out by the chip and the first device and that are described infra.

Naturally, the herein below described embodiment is only for exemplifying purposes and is not considered to reduce the scope of the invention.

**Figure 1** shows schematically a terminal equipment 10, as a system for accessing a service, that is connected to a remote server 18.

Such a system 10 includes a mobile phone 12, as a user terminal, and a UICC 14.

For sake of simplicity, the mobile phone 12, the UICC 14 and the remote server 18 are termed herein after the phone 12, the chip 14 and the server 18 respectively.

Only one terminal equipment is represented for clarity reason. However, the server 18 is able to access a fleet of terminals/chips.

Instead of a phone, it may be any other device including means for processing data, comprising or being connected to wireless communication means for exchanging data with outside, and comprising or being connected to means for storing data.

Within the present description, the adjective "wireless" used within the expression "wireless communication means" denotes notably that the communication means communicates via one or several Long Range (or LR) Radio-Frequency (or RF) links.

The LR RF may be fixed at several hundreds of MHz, for instance, around 850, 900, 1800, 1900 and/or 2100 MHz.

Instead of being constituted by a phone, the chip host device may be, for instance, a Machine-to-Machine (or M2M) controller, a set-up box, a desktop computer, a laptop computer, a media-player, a game console, a tablet, a netbook, a handset and/or a Personal Digital Assistance (or PDA) that incorporates or cooperates with a baseband radio processor. The baseband radio processor manages radio functions in cooperation with an antenna for communicating, Over-The-Air (or OTA), with another entity, like the server 18.

Such a chip host device set is not exhaustive but only for exemplifying purposes.

The phone 12 is preferably used for accessing one or several mobile radio-communication networks 16.

The mobile radio-communication networks 16 may be constituted by a Global Service for Mobiles (or GSM), a General Packet Radio Service (or GPRS), a Universal Mobile Telecommunications System (or UMTS), a UTRAN (acronym for "UMTS Terrestrial Radio Access Network"), an EDGE (acronym for "Enhanced Data Rates for GSM Evolution"), a Code Division Multiple Access (or CDMA), a WLAN (acronym for "Wide Local Area Network") and/or a Long Term Evolution (or LTE) type network(s).

Such a mobile radio-communication network set is not exhaustive but only for exemplifying purposes.

The phone 12 includes preferably a display screen 122 and a keyboard 124, as Man Machine Interface (or MMI).

Alternatively, instead of a physical keyboard separated from the display screen, the phone 12 is equipped with a touch sensitive display screen, as virtual keyboard.

The MMI allows a phone user to interact with the phone 12.

The phone 12 comprises an antenna 126. The antenna 126 allows communicating data, through an LR RF link(s) 15, with several mobile radio-communication networks 16.

The phone 12 includes data processing means, such as one microprocessor (not represented), data storing means (not represented), as phone memory, and one or several Input/Output (or I/O) interfaces that are linked all together through a control and data bus (not represented).

The phone 12 plays, in a preferential manner, a role of a modulator-demodulator (or modem), so as to exchange data with the server 18.

The phone 12 carries out the following operations:
- a modulation of an analogical carrier signal to encode digital information to be transmitted, over the antenna 126, to the server 18 (and/or another entity (not represented)), and
- a demodulation of a received analogical carrier signal to decode the encoded digital information that is received, over the antenna 126, from the server 18 (and/or another entity (not represented)).

The phone memory may comprise one or several memories including one or several volatile memories and one or several non-volatile memories.

A phone memory, be it either volatile or non volatile, stores, at least in a temporary manner, data relating to a subscription which the phone 12 receives from the chip 14.

The phone 12 may include, as volatile memory, a cache memory.

The phone memory stores an Operating System (or OS) and one or several applications.

The phone 12, as chip host device, is preferably coupled or connected to the chip 14.

The phone I/O interfaces include one or several I/O interfaces for exchanging data with the chip 14.

The chip 14 is under control of the phone microprocessor.

Alternately, instead of being coupled to the chip 14, the phone memory(ies) stores data stored within the chip 14 as described infra.

According to a particular embodiment, the chip 14 is soldered to a Printed Circuit Board (or PCB) of the phone 12.

According to another embodiment, the phone I/O interface with the chip 14 is an International Organization for Standardization (or ISO) 7816 interface, as contact interface, when the chip 14 is inserted, in a removable manner, within the phone 12.

Alternately, instead of a contact interface, the phone I/O interface with the chip 14 is connected to or includes a contact-less interface. The phone 12 is connected to or includes means for communicating data while using preferably a Short Range (or SR) RF link. The SR RF link may be related to any technology that allows the phone 12 to exchange data, through a so-termed contact-less link with the chip 14. The SR RF may be fixed at 13,56 MHz and related to a Near Field Communication (or NFC) type technology, as contact-less technology.

The chip 14 is preferably associated with or tied to the server 18.

The chip 14 belongs to a user, as subscriber to a wireless service(s).

The chip 14 is connected, through a bi-directional link 13, to the phone 12.

The chip 14 includes a microprocessor(s) 142, as data processing means, a memory(ies) 144, as data storing means, and one or several I/O interfaces 146 that are internally all connected, through an internal bidirectional data bus 143, to each other.

The microprocessor 142 processes, controls and communicates internally data with all the other components incorporated within the chip and, through the I/O interface(s) 146, with the chip exterior.

The microprocessor 142 executes or runs one or several applications including the subscription manager.

The microprocessor 142 is preferably able to initiate actions, in order to interact directly with the outside world, in an independent manner of the phone 12, as a chip host device. Such a capacity of interaction at the initiative of the chip 14 is also known as proactive capacity. According to one preferred embodiment, the chip 14 is able to use SIM ToolKit (or STK) type commands, as proactive commands.

The chip 14 is thus able to send, at its own initiative, through the phone 12, to any device connected to the phone 12 a proactive command for sending to the server 18 a message, like a HyperText Transfer Protocol (or HTTP) type message, that includes a request for opening a channel, such as "open channel".

The chip 14 is able to switch from a subscription to another subscription by deactivating a current active subscription and activating a non-active subscription to be activated.

The microprocessor 142 executes, in a preferred manner, one or several security functions.

The security functions include preferably a user authentication process to be used prior to continuing to access the memory 144, notably at a boot and/or a re-boot of the chip 14. To authenticate the user, the user has to provide a Personal Identity Number (or PIN) or biometric data, as user reference data, that is stored within the memory 144. As biometric data, it may include one or several fingerprints, one or several iris prints, one or several voiceprints relating to one or several authorized users.

The I/O interface(s) 146 allow communicating data from the internal chip components to the chip exterior and conversely.

The memory 144 stores preferably data relating to a Uniform Resource Identifier (or URI), a Uniform Resource Locator (or URL) and/or an Internet Protocol (or IP) address of an external entity to be addressed, like a Remote Provisioning System (or RPS), as a remote server 18 connected to a first mobile radio-communication network 161.

The memory 144 stores an OS.

The memory 144 stores preferably one or several Subscriber Identity Module (or SIM) type applications.

The SIM type application(s) includes, among others, a SIM application for a Global Service for Mobiles (or GSM) type network, a Universal Subscriber Identity Module (or USIM) application for a Universal Mobile Telecommunications System (or UMTS) type network, a Code Division Multiple Access (or CDMA) Subscriber Identity Module (or CSIM) application and/or an Internet protocol Multimedia Subsystem (or IMS) Subscriber Identity Module (or ISIM) application.

The SIM type application(s) allow(s) the phone 12 to authenticate to one or several mobile radio-communication networks 16.

To authenticate to the mobile radio-communication networks 16, the SIM type application(s) use(s) preferentially a network authentication key Ki relating to a current active subscription. The SIM type application(s) also use(s) preferably data, as a challenge that is supplied by an external entity that attempts to authenticate the subscriber, and an authentication algorithm, like e.g. Milenage.

The memory 144 stores one or several additional applications. Among the supported applications, the memory 144 stores an invention application termed subscription manager that the microprocessor 142 executes.

The subscription manager allows carrying out a double subscription switch function at the chip 14 level, so as to store data relating to one and the same active subscription before and after a double subscription switch. The subscription manager allows ensuring to come back to a mobile radio-communication network connection with the server 18 after such a double subscription switch without involving the terminal user.

To carry out such a double subscription switch, the subscription manager includes a first variable relating to a previous active subscription and a second variable relating to a next active subscription.

The memory 144 stores data relating to a plurality of subscriptions to several mobile radio-communication networks 16, as wireless services.

Each set of data relating to one subscription to one mobile radio-communication network includes:
- an International Mobile Subscriber Identity (or IMSI), as subscriber and service subscription identifier for accessing a mobile radio-communication network;
- a key Ki, as network authentication key, allowing to authenticate the concerned subscriber to the concerned mobile radio-communication network;
- Milenage, as authentication algorithm, allowing to authenticate the concerned subscriber to the concerned mobile radio-communication network;
- one or several passwords, like a PIN, and/or one or several cryptographic algorithm(s), as data relating to secret(s), that is(are) securely stored within the chip 14;
- a file system including one or several Elementary Files (or EF);
- one or several security keys, like a key(s) for encrypting/decrypting data and/or a key(s) for signing data a key(s);
- one or several applicative keys, like a key for accessing a user bank account through the mobile radio-communication network; and/or
- one or several credentials, like a user name and/or IDentifier (or ID) of the subscriber, as data relating to the user.

For sake of simplicity, the memory 144 stores, for instance, only two sets of subscription data, one set of data relating to a first subscription, as "subscription 1 ", and another set of data relating to a second subscription, as "subscription 2".

Two subscriptions to different mobile radio-communication networks 161 and 162 are available, at the client side, within one and the same chip 14.

However, the memory 144 may store more than two sets of subscription data and the invention is still applicable.

The memory 144 stores within a first security domain 145, as a first memory area, the first set of data relating to a first subscription.

The first subscription data set allows accessing from the phone 12, through a first mobile radio-communication network 161, to the server 18. The first mobile radio-communication network 161 is connected to the server 18.

The first subscription "subscription 1" is active, i.e. is in an enabled state, before a first subscription switch and after a second subscription switch at the chip 14 side.

The first subscription data comprises an identifier IMSI1, as a first subscriber, relating to a first subscription.

The first subscription data includes preferably a first key Ki1, as a first network authentication key Ki1, for authenticating the subscriber to the first mobile radio-communication network 161. The first network authentication key Ki1 is associated with the first subscriber IMSI1. The first network authentication key Ki1 allows authenticating the associated first subscriber to the first mobile radio-communication network 161.

The first security domain 145 may further store one or several applications that are accessible with a Mobile Network Operator (or MNO) that operates or lets operate the first mobile radio-communication network 161.

The memory 144 also stores, within a second security domain 147, as a second memory area, the second set of data relating to a second subscription.

The second subscription data set allows accessing from the phone 12 to a second mobile radio-communication network 162. The second mobile radio-communication network 162 is not connected to the server 18.

The second mobile radio-communication network 162 is distinct from the first mobile radio-communication network 161.

The second subscription "subscription 2" is non-active, i.e. is in a disabled state, before a first subscription switch and after a second subscription switch at the chip 14 side.

The second subscription data comprises an identifier IMSI2, as a second subscriber, relating to a second subscription.

The second subscription data includes preferably a second key Ki2, as a second network authentication key Ki2, for authenticating the subscriber to the second mobile radio-communication network 162. The second network authentication key Ki2 is associated with the second subscriber IMSI2. The second network authentication key Ki2 allows authenticating the associated second subscriber to the second mobile radio-communication network 162.

A particular subscription may be identified by one or several identifiers, like an subscriber identifier IMSI, an identifier relating to application, also termed Application IDentifier (or AID), a Security Domain Subscription Issuer (or SDSI) and/or an identifier(s) relating to any software or hardware entity(ies) that is(are) involved within a communication path to access the concerned subscription data.

The subscription manager manages the first variable relating to a previous active subscription and the second variable relating to a next active subscription.

The subscription manager carries out a first subscription switch from the first subscription "subscription 1" to the second subscription "subscription 2".

According to an essential invention feature, the subscription manager is adapted to set the first variable to the first subscription, as a subscription that is active before the first subscription switch.

The subscription manager is able to send, through the phone 12 OS, to the server 18 a request for accessing a service by using the second subscription, as a current active subscription after the first subscription switch.

The subscription manager is able to receive, as request response, either from the server 18 a server connection success or from the chip host device OS a server connection failure.

According to another essential invention feature, the subscription manager is adapted to set the second variable to a current value of the first variable, after having attempted, without any success, to address the server 18.

The subscription manager carries out a second subscription switch from the second subscription "subscription 2" to the first subscription "subscription 1" by using a current value of the second variable, namely the first subscription.

More exactly, the subscription manager is adapted to de-activate, based on a current value of the second variable, the second subscription "subscription 2" and to activate, based on a current value of the second variable, the first subscription "subscription 1".

Once the first subscription "subscription 1" is again active at the chip 14 side, the subscription manager is adapted to send, through the first mobile radio-communication network 161, to the server 18 another request for accessing a service by using the first subscription "subscription 1 ", as a current active subscription.

The subscription manager is able to receive, as request response, from the server 18 a server connection success by using the first subscription "subscription 1 ".

Thus, the chip 14 forces to come back to a subscription, after two internal subscription switches, that allows accessing, through the mobile radio-communication network 161, the server 18.

Once the two internal subscription switches are carried out, the subscription manager may set the second variable to, e.g. zero, as a predetermined default value and a non-defined state.

Optionally, once the two internal subscription switches are carried out, the subscription manager also uses a third variable relating to a current active subscription. The subscription manager sets the third variable to a current value of the second variable, namely the first subscription.

The first mobile radio-communication network 161 is(are) connected, through a bidirectional wired link 17, to the server 18, as an OTA platform and back-end server.

The server 18 is identified by a URI, like an URL, an IP address or the like, as server identifier.

The server identifier may be stored within the chip memory 144 or a phone memory.

The server 18 may be operated by a mobile radio-communication network operator, as an MNO or a Mobile Virtual Network Operator (or MVNO), a service provider or on its behalf.

The server 18 is hosted by a computer.

The server 18 is dedicated to running an application for managing a database and communicating data of the database to outside.

Alternately, another server (not represented) that is connected to the server 18 manages the database.

The server 18 includes preferably a memory 182 that stores the database.

Instead of an internal memory, the server 18 is connected to an external memory (not represented) storing the database.

The database includes a set of one or several identifiers relating, each, to an individual interlocutor or client that is, each, associated with data relating to a subscription that has to be active, so as to access the server 18.

For sake of simplicity, the represented database registers data relating to only one client, the chip 14 (not represented), that is associated with data relating to the first subscription "subscription 1".

**Figure 2** depicts an exemplary embodiment of a message flow 20 that involves the phone 12, the chip 14 and the server 18.

In the explained example, it is assumed that the phone 12 is coupled to the chip 14, as a third device, which stores a first set of data relating to a first subscription "subscription 1" to be active to access the server 18 and a second set of data relating to a second subscription "subscription 2".

It is assumed that only one subscription is active at a given time and that the first subscription "subscription 1" is active at the chip 14 before any subscription switch.

It is assumed that the chip 14 has previously sent to the phone 12 OS a refresh command (not represented) in a UICC reset mode, as an STK type command and a message for requesting the phone 12 OS to launch an execution of the subscription manager and to read data.

The phone 12 OS sends to the subscription manager a reset command 22, as an STK type command. Such a reset command allows launching an execution of the subscription manager and reading all the files stored within the chip memory 144, and thus carrying out an internal first subscription switch.

Optionally, the subscription manager requests a phone user to authenticate.

Once the phone 12 resets the chip 14 and after a preferable successful user authentication, the subscription manager is launched and executed.

The subscription manager de-activates the first subscription "subscription 1 ", as an active subscription, and activates the second subscription "subscription 2", as a non-active subscription.

Once the first subscription is non-active, the subscription manager sets the first variable 25 to the first subscription by using, e.g. the corresponding first security domain SDSI 1, as a first subscription identifier.

At the time 21 of the activation of the second subscription, the second subscription is active and the corresponding second secure domain "SDSI2" 147 is active during a first time period 23. The first time period 23 is valid until a de-activation of the second subscription.

Once the second subscription is active, the subscription manager sends to the phone 12 OS an Answer to Reset accompanied with data 24 relating to the second subscription, as a current active subscription.

Once the second subscription data is received, the phone 12 OS updates its memory (like a cache memory), at least in a temporary manner, while duplicating the second set of data relating to the second subscription.

Once provisioned by the subscription manager, the phone 12 stores the data relating to the second subscription that constitutes a copy of the data relating to the subscription which the subscription manager has just switched to.

Such a first configuration of the phone 12 allows to access, after a first subscription switch within the chip 14, a second set of data relating to a second subscription to be also active at the phone 12 side.

The subscription manager sends, through the phone 12 OS, to the server 18 a first request 26 for accessing a service by using the second subscription, as a current active subscription.

The phone 12 OS attempts to access the server 18 by using the second subscription, as a current active subscription.

The phone 12 OS sends to the subscription manager, as request response, a message 28 for informing the subscription manager of a failure relating to an access to the server 18 and the service associated with the second subscription.

Once the subscription manager receives a server connection failure, the subscription manager sets the second variable 27 to a current value of the first variable, namely by using, e.g. the corresponding first security domain SDSI 1, as a first subscription identifier. The chip 14 launches another internal subscription switch, so as to retrieve a connection to the server 18.

The subscription manager sends to the phone 12 OS data 210, such as a "91 XX" and an STK type command, as a message for requesting the phone 12 OS to read data. The STK type command "91XX" means that the chip 14 has data available to the phone 12 with a length equal to "XX" in hexadecimal.

When the phone 12 has received and interpreted the data 210 sent by the chip 14, the phone 12 sends to the chip 14 a command 212, such as "FETCH", as an STK type command, for receiving data.

Once the chip 14 receives from the phone 12 the command 212 for receiving data, the subscription manager sends to the phone 12 OS a Refresh command in a UICC reset mode, as an STK type command and a message 214 for requesting the phone 12 OS to re-launch an execution of the subscription manager and to read data.

As far as the chip 14 is not restarted, the second subscription remains active at the chip 14 side.

The phone 12 sends to the subscription manager a message 216 including a reset command. Such a reset command allows re-launching an execution of the subscription manager and reading all the files stored within the chip memory 144.

Optionally, the subscription manager requests a phone user to authenticate.

Once the phone 12 resets the chip 14 and after a preferable successful user authentication, the subscription manager is re-launched.

The subscription manager reads the current second variable value. If the current second variable value is defined as being a next active subscription, then the subscription manager has another subscription switch operation to carry out.

The subscription manager de-activates, based on the current second variable value, the second subscription. To de-activate the second subscription, the subscription manager compares the current second variable value to each of the subscription that is present within the chip 14 and, if the subscription does not match the first subscription, then the subscription manager disables the concerned subscription.

Up to a de-activation of the second subscription, the second subscription is active and the corresponding second secure domain "SDSI2" 147 is active.

The subscription manager activates, based on the current second variable value, the first subscription. To activate a subscription, the subscription manager compares the current second variable value to each of the subscription that is present within the chip 14 and, if the subscription does match the first subscription, then the subscription manager enables the concerned subscription.

At the time 213 of the activation of the first subscription, the first subscription is active and the corresponding first secure domain "SDSI1" 145 is active during a second time period 215. The second time period 215 is valid until a de-activation of the first subscription during another internal subscription switch.

Optionally, the subscription manager sets the third variable relating to a current active subscription to a current value of the second variable relating to the next active subscription, namely the first subscription, by using, e.g. a corresponding first security domain identifier, as a subscription identifier.

Optionally, the subscription manager sets the second variable to, e.g. zero, as a non-defined state.

Once the first subscription is active, the subscription manager sends preferably to the phone 12 OS an Answer to Reset accompanied with data 218 relating to the first subscription, as a current active subscription.

Once the first subscription data is received, the phone 12 OS updates its memory , (like a cache memory), at least in a temporary manner, while duplicating the first set of data relating to the first subscription.

Once provisioned by the subscription manager, the phone 12 stores the data relating to the first subscription that constitutes a copy of the data relating to the subscription which the subscription manager has just switched to.

Such a second configuration of the phone 12 allows to access, after a second subscription switch within the chip 14, the first set of data relating to the first subscription that is active at the phone 12 side and at the chip 14 side.

The subscription manager sends, through the phone 12 OS, to the server 18 a second request 220 for accessing a service by using the first subscription, as a current active subscription.

The phone 12 OS attempts to access the server 18 by using the first subscription, as a current active subscription.

The phone 12 OS and the remote server may exchange data by using an HTTP or HTTPS type protocol but any other data communication protocol may be used.

The server 18 sends back to the subscription manager, as request response, a message 222 for informing the subscription manager of a success relating to an access to the service associated with the first subscription.

Once the subscription manager receives a server connection success, the subscription manager retrieves a connection to the server 18. The server 18 and the subscription manager may further exchange, so as to access one or several services offered by or through the server 18.

The invention solution allows changing, after a double subscription switch at the subscription manager side, the active subscription without needing to involve a phone user, except for submitting user authentication data, when applicable.

The invention solution is transparent to the user, apart from a possible user authentication operation.

The invention solution is secure by authenticating the terminal equipment and possibly a terminal user.

The embodiment that has just been described is not intended to limit the scope of the concerned invention. Other embodiments may be given. As another embodiment example, instead of exchanging with a remote server, the subscription manager exchanges, over a contact or contact-less link, with a local entity, like a terminal or a M2M type equipment.

## Claims

1. A method (20) for accessing one service,
**characterized in that,** a first device (12) accessing data storing means (144), the data storing means storing data relating to at least two subscriptions (145, 147), the method comprises the following steps:
- a subscription manager de-activates an active subscription, said first subscription,
- the subscription manager activates a non-active subscription, said second subscription, the subscription manager including a first variable (25) relating to a previous active subscription, the subscription manager setting the first variable to the first subscription;
- the subscription manager sends, through the first device operating system, to a second device (18) a first request (26) for accessing a service by using the second subscription, as a current active subscription;
- the first device operating system sends to the subscription manager a message (28) for informing the subscription manager of a failure relating to an access to the service associated with the second subscription;
- the subscription manager including a second variable (27) relating to a next active subscription, the subscription manager sets the second variable to a current value of the first variable;
- the subscription manager sends to the first device operating system a message (214) for requesting the first device operating system to re-launch an execution of the subscription manager and to read data;
- the subscription manager de-activates, based upon a current value of the second variable, the second subscription;
- the subscription manager activates, based upon the current value of the second variable, the first subscription;
- the subscription manager sends, through the first device operating system, to the second device a second request (220) for accessing a service by using the first subscription, as a current active subscription;
- the second device sends to the subscription manager a message (222) for informing the subscription manager of a success relating to an access to the service associated with the first subscription.

2. Method according to claim 1, wherein prior to sending to the second device the second request for accessing a service by using the first subscription, the subscription manager including a third variable relating to a current active subscription, the subscription manager sets the third variable to a current value of the second variable.

3. Method according to claim 1 or 2, wherein, prior to sending to the second device the second request for accessing a service by using the first subscription, the subscription manager sets the second variable to a non-defined state.

4. Method according to any previous claim, wherein, prior to sending to the second device the second request for accessing a service by using the first subscription, the subscription manager sends to the first device operating system data relating to the first subscription, as a current active subscription.

5. Method according to claim 4, wherein the subscription manager and the first device operating system exchange data by using a SIM ToolKit type command.

6. Method according to any previous claim, wherein the first device operating system and the second device exchange data by using an HTTP or HTTPS type protocol.

7. Method according to any previous claim, wherein the message for requesting the first device operating system to re-launch an execution of the subscription manager and to read data includes a Refresh command in a UICC reset mode.

8. A first device (12) for accessing one service,
**characterized in that**, the first device comprising data storing means (144), the data storing means storing data relating to at least two subscriptions (145, 147), the data storing means storing a subscription manager, the subscription manager is configured:
- to de-activate an active subscription, said first subscription,
- to activate a non-active subscription, said second subscription, the subscription manager including a first variable (25) relating to a previous active subscription,
- to set the first variable to the first subscription;
- to send, through the first device operating system, a first request (26) for accessing a service by using the second subscription, as a current active subscription;
- to receive from the first device operating system a message (28) for informing the subscription manager of a failure relating to an access to the service associated with the second subscription; the subscription manager including a second variable (27) relating to a next active subscription,
- to set the second variable to a current value of the first variable;
- to send to the first device operating system a message (214) for requesting the first device operating system to re-launch an execution of the subscription manager and to read data;
- to de-activate, based upon a current value of the second variable, the second subscription;
- to activate, based upon the current value of the second variable, the first subscription;
- to send, through the first device operating system, a second request (220) for accessing a service by using the first subscription, as a current active subscription;
- to receive a message (222) for informing the subscription manager of a success relating to an access to the service associated with the first subscription.

9. Device according to claim 8, wherein the first device includes a terminal.

10. A system (10) for accessing one service,
**characterized in that,** the system comprising a first device (12) and a chip (14), the chip being coupled or connected to the first device, the chip comprising data storing means (144), the data storing means storing data relating to at least two subscriptions (145, 147), the data storing means storing a subscription manager, the subscription manager is configured:
- to de-activate an active subscription, said first subscription,
- to activate a non-active subscription, said second subscription, the subscription manager including a first variable (25) relating to a previous active subscription,
- to set the first variable to the first subscription;
- to send, through the first device operating system, a first request (26) for accessing a service by using the second subscription, as a current active subscription;
- to receive from the first device operating system a message (28) for informing the subscription manager of a failure relating to an access to the service associated with the second subscription; the subscription manager including a second variable (27) relating to a next active subscription,
- to set the second variable to a current value of the first variable;
- to send to the first device operating system a message (214) for requesting the first device operating system to re-launch an execution of the subscription manager and to read data;
- to de-activate, based upon a current value of the second variable, the second subscription;
- to activate, based upon the current value of the second variable, the first subscription;
- to send, through the first device operating system, a second request (220) for accessing a service by using the first subscription, as a current active subscription;
- to receive a message (222) for informing the subscription manager of a success relating to an access to the service associated with the first subscription.
